# EUROPEAN PATENT SPECIFICATION

(11) **EP 2 705 926 B1**
(45) Date of publication and mention of the grant of the patent: **23.01.2019**
(21) Application number: 13183815.3
(22) Date of filing: 10.09.2013
(51) Int. Cl.: B23P 15/00, B24B 19/02

(54) **Finishing process for making blade slots in a rotor disc**
Feinbearbeitungsprozess für die Herstellung von Nuten für Rotorblätter in einer Rotorscheibe
Procédé de finition pour la fabrication de connecteurs de pales dans un disque de rotor

(30) Priority: 10.09.2012 IT TO20120780
(43) Date of publication of application: 12.03.2014
(73) Proprietor: Ge Avio S.r.l., Rivalta di Torino (IT); FIDIA S.p.A., 10099 San Mauro Torinese (IT)
(72) Inventor: Cherubini, Marco, 10135 Rivalta Di Torino (IT); Furxhi, Guido, 10099 San Mauro Torinese (IT); Canola, Mauro, 10040 Rivalta Di Torino (IT)
(74) Representative: Lovino, Paolo

(56) References cited:
- EP-A1- 1 356 886
- EP-A1- 1 967 307
- EP-A2- 1 407 852
- US-A1- 2011 008 172

## Description

The present invention concerns a finishing process for making blade slots in a rotor disc.

As is known, the rotating discs provided in gas turbines, for example for aeronautical propulsion, for marine propulsion or for the production of electricity, have a plurality of slots made along their periphery for mounting respective blades. In particular, the blades comprise respective roots which have a profile complementary to that of the slots so that they can be inserted and secured in the slots.

The slots are oriented in a parallel or inclined direction with respect to the rotation axis of the rotor disc and generally have a multiple lobe profile (substantially in the form of a tree or pine, in fact in English they are also called "fir tree slots"). More specifically, each slot is defined by a bottom surface, called 'bottom', and two lateral surfaces, called 'sides', which are shaped so as to form the above-mentioned lobes and are joined by means of the bottom.

To make these slots, the use of a broaching process is known, i.e. a chip removal process performed using a series of cutting tools with defined shapes, such as to rough and finish the surfaces of the slots.

The broaching process has a number of drawbacks:
- at the end of the broaching, the edges of the slots may have a burr, which must be removed by means of subsequent operations (for example by bevelling with small rotary cutters or by means of brushing);
- the sides of the slots are rectilinear, without any possibility of generating chamfers or bevels;
- broaching has a high risk of leaving residual tensile stress in the rotor disc material;
- broaching has a high risk of generating the so-called 'white layer' on the machined surfaces, with consequent alterations of the crystalline grain and micro-structural integrity of the surfaces;
- broaching tools have a high cost and long procurement times;
- broaching machines have long setting times and very high costs for purchasing new machinery.

To remedy some of these drawbacks, as an alternative to broaching, the use of super-abrasive grinders is known. In particular, the patent application US2011/0008172A1 corresponds to the preamble of claim 1 and teaches roughing of the slot with a first grinder and finishing by means of a second grinder to machine the sides and a third grinder to machine the bottom. In particular, the second grinder performs two passes, machining first one side and then the other.

The process described is not optimal in terms of the duration of the finishing grinders, the finishing times and the flexibility of the tools.

Furthermore, the contacts of the finishing grinders on the sides throughout the length of the pass tend to develop a relatively large quantity of heat, which can cause local overheating and therefore compromise the surface integrity of the turbine disc. In this regard, it is underlined that the requirements of surface integrity for the turbine discs are very strict as regards the entity of the residual tensions and the sub-surface extent of the portion of material which is altered due to the mechanical actions (shear strain) and thermal actions (high temperatures in the chip formation area) exercised by the finishing tools.

The solution described in EP1967307 concerns the production of slots, defined by at least two roughing operations, performed by means of respective cutters, and by a finishing operation performed by means of a grinder.

For the roughing, this solution entails a cycloidal movement of the cutters, which allows rapid ejection of the chips produced by the machining. For the finishing, on the other hand, the grinder has a profile complementary to that of the slot to be formed and is fed forward with a rectilinear motion.

Also this solution is not satisfactory, as the contact of the finishing grinder with the part machined throughout the length of the pass can generate a large quantity of heat and, therefore, create a thermally stressed surface state, which adds to the state of tension left by the milling.

The object of the present invention is to provide a finishing process for making blade slots in a rotor disc, which simply and inexpensively solves the problems described above.

The invention will now be described with reference to the accompanying drawings, which illustrate a non-limiting example thereof, in which:
- figure 1 is a perspective, with parts removed for clarity, of a rotor disc produced according to a preferred embodiment of the finishing process of the present invention;
- figures 2 and 3 are front views of a slot of the rotor disc of figure 1 and show different phases of the finishing process of the present invention; and
- figure 4 shows, in perspective, the phase of figure 3.

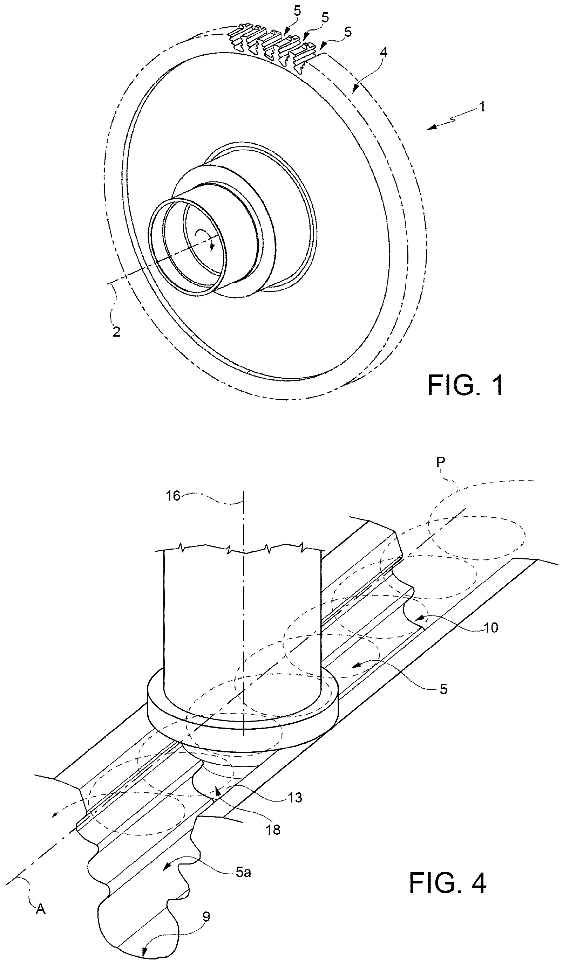

With reference to figure 1, the number 1 indicates, as a whole, a rotor disc (partially illustrated) for a compressor or for a turbine, for example for aeronautical or marine propulsion or for the production of electricity.

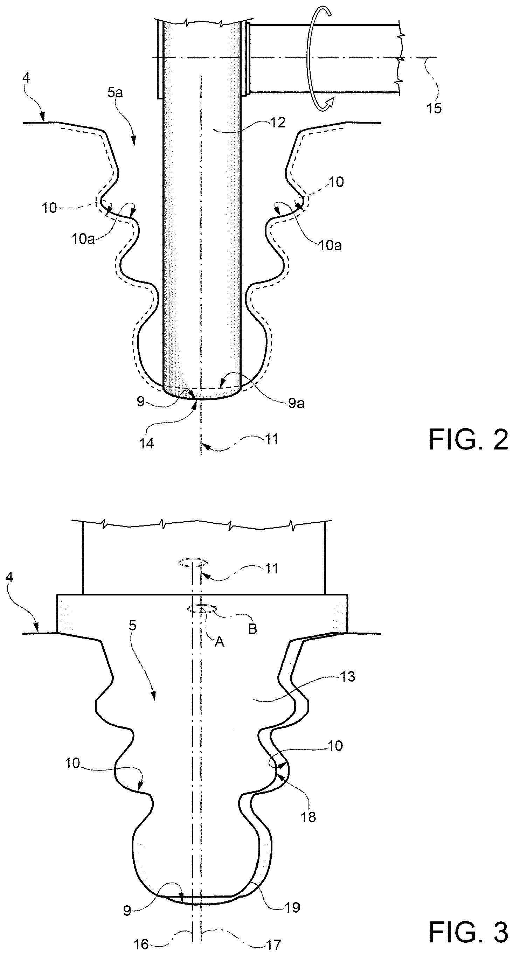

The rotor disc 1 has a rotation axis 2 and is radially delimited by a lateral surface 4, on which a plurality of slots 5 is provided. The slots 5 are angularly spaced about the rotation axis 2 and substantially have a multiple lobe or "tree" profile. As can be seen in figure 3, each slot 5 is defined by a bottom surface 9, called "bottom", and by two lateral surfaces 10, called "sides", facing each other and connected to the bottom 9.

In other words, the sides 10 of each slot 5 are symmetrical with respect to a symmetry plane 11, converge towards the bottom 9 and are shaped so as to present a plurality of lobes or projections.

Preferably, the symmetry plane 11 of each slot 5 is radial with respect to the rotation axis 2. Alternatively, the symmetry plane 11 of each slot 5 is inclined with respect to the rotation axis 2.

In use, the slots 5 are engaged by respective roots of blades, having an outer form complementary to the profile of the sides 10. In particular, the blades are mounted by inserting the respective roots in the slots 5 along the respective symmetry planes 11 and are therefore retained radially in the slots 5 due to the particular lobed form of the sides 10.

Each of the slots 5 is produced by means of one or more roughing operations (not described in detail), performed for example by a broach, grinders or cutters, and by means of a subsequent finishing process. As can be seen in figure 2, the roughing allows slots 5a to be obtained defined by two sides 10a and a bottom 9a, which have a stock to be removed by means of the finishing process. The latter is performed using only two grinders, in particular super-abrasive grinders, indicated by the reference numbers 12 (fig. 2) and 13 (fig. 3). For example, the abrasive material of the grinders 12,13 is defined by cubic boron nitride (CBN), deposited on an appropriately shaped support. By way of example, the peripheral speed or cutting speed of the grinders 12,13 is between 20 and 80 m/s; considering the actual dimensions of the grinders 12,13, said peripheral speed translates into the use of electrospindles capable of working at speeds between 40,000 and 100,000 rpm. During the passes of the grinders 12,13, it is expedient to use integral oil as cooling lubricant, to avoid excessive development of heat and to keep the abrasive clean of grinding residues.

Again with reference to figure 2, the grinder 12 must machine the bottom 9a, hence it has a lateral surface 14 with a profile complementary to that of the bottom 9 to be obtained. Advantageously, the grinder 12 is a disc grinder having a rotation axis 15 perpendicular to the symmetry plane 11. Preferably, the grinder 12 is used before the grinder 13, therefore it must have a height, parallel to the rotation axis 15, less than the minimum distance between the sides 10a.

As can be seen in figures 3 and 4, the grinder 13 must machine the sides 10a and is defined by a finger grinder having a rotation axis 16 which, preferably, is parallel to a radial axis 17 lying on the symmetry plane 11.

The grinder 13 has a lateral surface 18 defined by a circular directrix and by a generatrix having a profile complementary to that of the sides 10 to be obtained.

The grinder 13 terminates in a rounded tip 19, which preferably has an axial recess (not illustrated) in order not to come into contact with the bottom 9 previously obtained by means of the grinder 12 and, therefore, avoid peripheral grinding speeds that are too low, which would cause burning and excessive wear of the abrasive material of the grinder 13.

According to a preferred embodiment, applicable in particular if the stock on each side 10a is less than 0.5 mm, said stock is removed from both the sides 10a by one single pass of the grinder 13, which is moved along a trochoidal or cycloidal path P (fig. 4) comprising the combination of:
- a translation component along a feed direction A (fig. 4) lying on the symmetry plane 11, and
- a revolution component along a loop trajectory B (fig. 3) lying on a plane orthogonal to the symmetry plane 11.

The lateral surface 18 has a diameter smaller than the nominal distance required between the sides 10 of the slot 5, and also with respect to the distance between the sides 10a, so as to perform the grinding in contact with only one of the two sides 10a at a time.

The amplitude of the loop trajectory B is established so as to alternatively contact both the sides 10a. In other words, the abrasive material of the grinder 13 comes into contact with each of the two sides 10a in a discontinuous manner, alternating the contact with one and then the other side 10a. Due to this discontinuity of the grinding contact, the machining temperatures are lower and therefore the tools last longer than in the known solutions.

The loop trajectory B can be defined by a circle or, preferably, by an ellipse. In this second case, the ellipse is defined by a first axis lying on the feed direction A and a second axis orthogonal to the symmetry plane 11. The length of this second axis is finely set (also with micrometric corrections) to obtain the nominal distance required between the sides 10.

According to a preferred aspect of the present invention, it is possible to adjust the length of the second axis also during the pass, so as to produce slots of variable width. For example, in this way it is possible to produce sides 10 having lead bevels at the front and rear ends; and/or it is possible to compensate for any variations in rigidity of the material of the rotor disc 1 between one area and another in the feed direction A, thus obtaining a perfect parallelism between the sides 10.

In the case of loop trajectory B of elliptical type, even if the length of the second axis is varied by means of the machining control software, it is possible to leave unaltered the length of the first axis and the speed of the translation component in the feed direction A. By making the length adjustments of the first and second axis independent, it is possible to perform machining with constant overall speed in the feed direction A, but to vary the amplitude of the slot 5 during the pass.

According to a variation, it is possible to perform two or more successive passes, always with the same grinder 13 and always following trochoidal trajectories, but increasing the amplitude of the loop trajectory B in a direction orthogonal to the symmetry plane 11, or by varying the eccentricity of the ellipse, between one pass and the next. In this way, the stock of the sides 10a is removed a little at a time, until obtaining the nominal distance required between the sides 10.

From the above, the advantages of the process claimed and described with reference to the accompanying drawings are evident.

In particular, with respect to the known solutions, the trochoidal path P permits, in general, reduction of the finishing times, as stock is removed from both the sides 10a during the same pass, and allows the same positioning of the grinder 12 to be maintained on the machine tool for all the finishing passes of the sides 10. Furthermore, the trochoidal path P allows reduction of the temperatures in the machining area, since the contact between the finishing grinder and the sides 10a is of the intermittent type and very brief. In the known solutions, in particular, the finishing grinding is performed with a rectilinear feed path, which maintains the finishing grinder constantly in contact with the part being machined for the entire length of the pass. This condition means that, in the known solutions, the local development of thermal energy during the finishing is considerably higher than the trochoidal feed mode, with consequent local overheating which compromises the final surface integrity of the piece. In this invention, on the other hand, the temperature reduction during the finishing entails fewer risks of damaging the material of the rotor disc 1 in the grinding areas and therefore allows a final piece to be obtained which is undamaged and has very low residual tensions on its surface. Furthermore, the reduction in temperature with respect to the known solutions results in an increase in duration of the finishing grinders and allows a better finishing quality to be obtained.

Again due to the trochoidal path P, it is possible to use the same grinder 13 with given diameter to grind slots of different width, provided that the sides 10 have the same profile, so that the process is relatively flexible.

As described above, furthermore, it is possible to apply corrections to the width of the slots 5 between one pass and the next and/or directly during the same pass, if necessary also by means of real time control in feedback. In particular, by varying the amplitude of the trochoidal path during the machining, it is possible to produce chamfers or leads in the entry/exit areas of the slot 5.

The finish of the bottom 9 frees the bottom 9 itself from the stock, whatever the extent of said stock, hence the axial end of the rounded tip 19 substantially encounters no obstacles to feeding in the direction A during subsequent grinding of the sides 10a.

The use of a disc grinder for finishing the bottom 9 also prolongs the life of the tool, as it allows the cutting speed to be increased with respect to the known solutions, therefore avoiding burning of the abrasive material.

From the above it appears evident that modifications or variations can be made to the process described without departing from the protective scope as defined by the attached claims.

In particular, the form of the grinders 12,13 could be different from what is illustrated in the figures attached by way of example.

## Claims

1. Finishing process for making blade slots (5) in a rotor disk (1), each slot (5) being defined by a bottom surface (9) and by two lateral surfaces (10, 10a), which are joined to said bottom surface (9) and are symmetrical with respect to a symmetry plane (11); the finishing process being carried out after a roughing process and comprising, for each said slot:
- a bottom finishing step, wherein said bottom surface (9) is ground by means of a suitable grinder (12); and
- a lateral finishing step, wherein said lateral surfaces (10, 10a) are ground using a finger grinder (13);
**characterized in that** the lateral finishing step of each said slot comprises at least one pass of said finger grinder (13) along a trochoidal path, which comprises the combination of:
- a translation component along a feed direction (A) lying on said symmetry plane (11), and
- a revolution component along a loop trajectory (B) lying on a plane orthogonal to said symmetry plane (11);
and **in that** the amplitude of said loop trajectory (B) is set in such a manner as to bring said finger grinder (13) into contact with said lateral surfaces (10, 10a) alternately and remove stock from both said lateral surfaces (10, 10a) during the same said pass.

2. The process according to claim 1, **characterized in that** said finger grinder (13) has a rotation axis parallel to said symmetry plane (11).

3. The process according to claim 1 or 2, **characterized in that** said loop trajectory (B) is defined by an ellipse having a first axis lying on said feed direction (A) and a second axis orthogonal to said symmetry plane (11).

4. The process according to claim 3, **characterized by** varying the length of said second axis during said pass.

5. The process according to claim 4, **characterized in that** the length of said first axis and the speed of said translation component are constant during said pass.

6. The process according to any one of the preceding claims, **characterized in that** the lateral finishing step of each said slot comprises a first and at least one successive second pass of said finger grinder (13) along trochoidal paths; and **in that** the amplitude of said loop trajectory (B) is increased between said first and second pass.

7. The process according to any one of the preceding claims, **characterized in that** said suitable grinder is defined by a disk grinder (12) rotating about a rotation axis perpendicular to said symmetry plane (11).

8. The process according to any one of the preceding claims, **characterized in that** said lateral finishing step is carried out after said bottom finishing step.

## Patentansprüche

1. Feinbearbeitungsverfahren zur Herstellung von Schaufelschlitzen (5) in einer Rotorscheibe (1), wobei jeder Schlitz (5) durch eine Bodenfläche (9) und durch zwei Seitenflächen (10, 10a) definiert ist, die mit der Bodenfläche (9) verbunden sind und in Bezug auf eine Symmetrieebene (11) symmetrisch sind;
wobei das Feinbearbeitungsverfahren nach einem Schruppverfahren durchgeführt wird und für jeden Schlitz Folgendes umfasst:
- einen Boden-Feinbearbeitungsschritt, wobei die Bodenfläche (9) mittels einer geeigneten Schleifmaschine (12) geschliffen wird; und
- einen Seiten-Feinbearbeitungsschritt, wobei die Seitenflächen (10, 10a) mittels einer Fingerschleifmaschine (13) geschliffen werden;
**dadurch gekennzeichnet, dass** der Seiten-Feinbearbeitungsschritt von jedem Schlitz mindestens einen Durchgang der Fingerschleifmaschine (13) entlang einer trochoidalen Bahn umfasst, der die Kombination aus Folgendem umfasst:
- einer Translationskomponente entlang einer Vorschubrichtung (A), die auf der Symmetrieebene (11) liegt, und
- einer Umlaufkomponente entlang einer Schleifenbahn (B), die auf einer Ebene orthogonal zur Symmetrieebene (11) liegt;
und dadurch, dass die Amplitude der Schleifenbahn (B) so eingestellt ist, dass die Fingerschleifmaschine (13) abwechselnd in Kontakt mit den Seitenflächen (10, 10a) gebracht wird und Material von den beiden Seitenflächen (10, 10a) während desselben Durchgangs entfernt wird.

2. Verfahren nach Anspruch 1, **dadurch gekennzeichnet, dass** die Fingerschleifmaschine (13) eine Drehachse parallel zur Symmetrieebene (11) aufweist.

3. Verfahren nach Anspruch 1 oder 2, **dadurch gekennzeichnet, dass** die Schleifenbahn (B) durch eine Ellipse definiert ist, die eine erste Achse, die auf der Vorschubrichtung (A) liegt und eine zweite Achse, die orthogonal zur Symmetrieebene (11) liegt, aufweist.

4. Verfahren nach Anspruch 3, **dadurch gekennzeichnet, dass** die Länge der zweiten Achse während des Durchgangs verändert wird.

5. Verfahren nach Anspruch 4, **dadurch gekennzeichnet, dass** die Länge der ersten Achse und die Geschwindigkeit der Translationskomponente während des Durchgangs konstant sind.

6. Verfahren nach einem der vorhergehenden Ansprüche, **dadurch gekennzeichnet, dass** der Seiten-Feinbearbeitungsschritt von jedem Schlitz einen ersten und mindestens einen nachfolgenden zweiten Durchgang der Fingerschleifmaschine (13) entlang trochoidaler Bahnen umfasst; und dadurch, dass die Amplitude der Schleifenbahn (B) zwischen dem ersten und zweiten Durchgang erhöht ist.

7. Verfahren nach einem der vorhergehenden Ansprüche, **dadurch gekennzeichnet, dass** die geeignete Schleifmaschine durch eine Tellerschleifmaschine (12) definiert ist, die sich um eine Drehachse senkrecht zur Symmetrieebene (11) dreht.

8. Verfahren nach einem der vorhergehenden Ansprüche, **dadurch gekennzeichnet, dass** der Seiten-Feinbearbeitungsschritt nach dem Boden-Feinbearbeitungsschritt durchgeführt wird.

## Revendications

1. Processus de finition pour réaliser des fentes de lame (5) dans un disque de rotor (1), chaque fente (5) étant définie par une surface de fond (9) et par deux surfaces latérales (10, 10a), qui sont jointes à ladite surface de fond (9) et sont symétriques par rapport à un plan de symétrie (11) ; le processus de finition étant effectué après un processus d'usinage et comprenant, pour chaque dite fente :
- une étape de finition du fond, dans laquelle ladite surface de fond (9) est meulée au moyen d'une meuleuse adéquate (12) ; et
- une étape de finition latérale, dans laquelle lesdites surfaces latérales (10, 10a) sont meulées en utilisant une meuleuse à doigt (13) ;
**caractérisé en ce que** l'étape de finition latérale de chaque dite fente comprend au moins une passe de ladite meuleuse à doigt (13) le long d'un trajet trochoïdal qui comprend la combinaison de :
- un élément de translation le long d'un sens d'alimentation (A) situé sur ledit plan de symétrie (11), et
- un élément de rotation le long d'une trajectoire en boucle (B) située sur un plan orthogonal audit plan de symétrie (11) ;
et **en ce que** l'amplitude de ladite trajectoire en boucle (B) est établie de manière à mettre ladite meuleuse à doigt (13) en contact avec lesdites surfaces latérales (10, 10a) en alternance et à enlever le matériau desdites deux surfaces latérales (10, 10a) pendant la même dite passe.

2. Processus selon la revendication 1, **caractérisé en ce que** ladite meuleuse à doigt (13) a un axe de rotation parallèle audit plan de symétrie (11) .

3. Processus selon la revendication 1 ou 2, **caractérisé en ce que** ladite trajectoire en boucle (B) est définie par une ellipse ayant un premier axe situé sur ledit sens d'alimentation (A) et un deuxième axe orthogonal audit plan de symétrie (11).

4. Processus selon la revendication 3, **caractérisé par** la variation de la longueur dudit deuxième axe pendant ladite passe.

5. Processus selon la revendication 4, **caractérisé en ce que** la longueur dudit premier axe et la vitesse dudit élément de translation sont constantes pendant ladite passe.

6. Processus selon l'une quelconque des revendications précédentes, **caractérisé en ce que** l'étape de finition latérale de chaque dite fente comprend une première et au moins une deuxième passe successive de ladite meuleuse à doigt (13) le long de trajets trochoïdaux ; et **en ce que** l'amplitude de ladite trajectoire en boucle (B) est accrue entre ladite première et deuxième passe.

7. Processus selon l'une quelconque des revendications précédentes, **caractérisé en ce que** ladite meuleuse adéquate est définie par une meuleuse à disque (12) en rotation autour d'un axe de rotation perpendiculaire audit plan de symétrie (11).

8. Processus selon l'une quelconque des revendications précédentes, **caractérisé en ce que** ladite étape de finition latérale est effectuée après ladite étape de finition du fond.
